Europäisches Patentamt

European Patent Office

Office européen des brevets

(11) Veröffentlichungsnummer: **0 428 874 A2**

# (12) EUROPÄISCHE PATENTANMELDUNG

(21) Anmeldenummer: 90120188.9

(22) Anmeldetag: 20.10.90

(51) Int. Cl.5: **E04B 1/19**

(30) Priorität: 18.11.89 DE 8913643 U

(43) Veröffentlichungstag der Anmeldung:
29.05.91 Patentblatt 91/22

(84) Benannte Vertragsstaaten:
AT BE CH DE DK ES FR GB GR IT LI LU NL SE

(71) Anmelder: Zillgen, Joachim
Karl-Theodor Strasse 3
W-5000 Köln(DE)

Anmelder: Renken, Uwe Wilhelm
Aachener Strasse 40
W-5047 Wesseling(DE)

(72) Erfinder: Zillgen, Joachim
Karl-Theodor Strasse 3
W-5000 Köln(DE)
Erfinder: Renken, Uwe Wilhelm
Aachener Strasse 40
W-5047 Wesseling(DE)

(74) Vertreter: Feder, Wolf-Dietrich et al
Dr. Wolf-D. Feder, Dr. Heinz Feder Dipl.-Ing.
P.-C. Sroka Dominikanerstrasse 37
W-4000 Düsseldorf 11(DE)

(54) Verbindungsstück für aus Rohren und Knotenelementen aufgebaute Konstruktionssysteme.

(57) Ein Verbindungsstück für aus Rohren und Knotenelementen aufgebaute Konstruktionssysteme, insbesondere für den Messebau. Das Verbindungsstück besitzt eine Rohrbefestigungsschraube (3) und eine Knotenbefestigungsschraube (2), die axial zueinander fluchtend in einer sie umfassenden Hülse (1) mit nach außen weisenden Gewindeteilen angeordnet sind. Die Knotenbefestigungsschraube (2) ist in der Hülse (1) axial verschiebbar, aber unverdrehbar angeordnet und über einen durch eine axiale Bohrung der Rohrbefestigungsschraube (3) geführten Schraubenbolzen (4) mit der Rohrbefestigungsschraube (3) verbunden. Das Kopfteil (3.2) der Rohrbefestigungsschraube (3) ist verdrehbar in der Hülse (1) angeordnet und weist eine axiale, mit einem Innengewinde versehene Bohrung (3.4) auf, in die das ihm gegenüberliegende, mit einem entsprechenden Außengewinde versehene Kopfteil (2.2) der Knotenbefestigungsschraube (2) einschraubbar ist. Die Gewinde weisen den gleichen Schraubensinn auf wie der Gewindeteil (2.1) der Knotenbefestigungsschraube (2) und die Länge der Bohrung (3.4) ist so bemessen, daß das Kopfteil (2.2) der Knotenbefestigungsschraube in das Kopfteil (3.2) der Rohrbefestigungsschraube soweit einschraubbar ist, daß die Knotenbefestigungsschraube (2) auf ihrer gesamten Länge innerhalb der Hülse (1) liegt.

FIG. 1

Die Erfindung betrifft ein Verbindungsstück für aus Rohren und Knotenelementen aufgebaute Konstruktionssysteme, insbesondere für den Messebau, mit einer Rohrbefestigungsschraube und einer Knotenbefestigungsschraube, die axial zueinander fluchtend in einer sie mindestens im Bereich ihrer Kopfteile umfassenden Hülse mit nach außen weisenden Gewindeteilen angeordnet sind, wobei die Knotenbefestigungsschraube in der Hülse axial verschiebbar, aber unverdrehbar angeordnet und über einen durch eine axiale Bohrung der Rohrbefestigungsschraube geführten Schraubenbolzen mit der Rohrbefestigungsschraube verbunden ist.

Im Messebau werden Konstruktionssysteme zum Aufbau von Messeständen u. dgl. verwendet, die als aus Rohren und Knotenelementen bestehende Bausätze bereitgestellt werden, wobei die Knotenelemente beispielsweise im wesentlichen kugelförmige Gestalt besitzen können und in verschiedenen Raumrichtungen orientierte mit Innengewinden versehene Bohrungen aufweisen, an denen die als Rohre ausgebildeten Streben über Verbindungsstücke befestigt werden, so daß eine zusammenhängende Konstruktion entsteht.

Ein bekanntes Verbindungsstück besitzt eine gegenüber einer Sechskanthülse axial bewegbare, aber nicht versenkbare Knotenbefestigungsschraube. Das Verbindungsstück ist fest mit dem Rohr verbunden und die Sechskanthülse dient dazu, um zur Montage einen Schraubenschlüssel ansetzen zu können. Der Außendurchmesser des Verbindungsstückes ist für alle im Messebau gängigen Rohrquerschnitte gleich.

Ein anderes bekanntes Verbindungsstück besitzt eine axial bewegliche und versenkbare, im versenkten Zustand aber nicht arretierbare Knotenbefestigungsschraube. Die Knotenbefestigungsschraube ist frei beweglich und wird durch eine Feder in einer sie umgebenden Sechskanthülse gehalten. Das Verbindungsstück ist mit einem Gewinde im Rohr befestigt und damit austauschbar. Im montierten Zustand ist dieses bekannte Verbindungsstück deutlich vom Rohr zu unterscheiden. Es gibt nur ein Format für alle angebotenen Rohrdurchmesser.

Ein drittes Verbindungsstück besteht aus zwei Klemmteilen (Klappen), die mit einer Zylindersenkkopfschraube zusammengehalten werden. Die beiden Klappen verbinden Rohr und Knotenelement, und zwar über separat an Rohr und Knotenelement zu schraubende Klemmkopfschrauben. Diese Klappen besitzen denselben Außenquerschnitt wie die dazu gehörigen Rohre und verlängern dadurch optisch das Rohr, sind jedoch durch ihre Zweiteiligkeit gut als Verbindungsstück zu erkennen.

Die bekannten Verbindungsstücke besitzen eine Reihe von Nachteilen.

Im Messebau ist ein flexibles Handling der Konstruktionselemente Voraussetzung, um effektiv arbeiten zu können. Das Konstruktionssystem muß leicht und schnell auf- und abzubauen sein und es muß ein unproblematischer Austausch fehlerhafter Teile, beispielsweise die Trennung eines Verbindungsstückes vom Rohr oder der Austausch eines Rohres im System möglich sein. Außerdem soll der optisch gute Eindruck des Konstruktionssystems nicht durch die Verbindungsstücke leiden. Durch ständiges Auf- und Abbauen werden die Elemente des Konstruktionssystems stark beansprucht und häufig unsachgemäßer Behandlung ausgesetzt. Dabei können vor allem die empfindlichen Gewindeteile, mit denen das Verbindungsstück am Knotenelement befestigt wird, beschädigt werden. Es ist also wünschenswert, wenn diese Gewindeteile zumindest bis zur Montage geschützt sind. Alle diese Voraussetzungen sind bei den bisher bekannten Verbindungsstücken nur sehr unvollkommen oder gar nicht erfüllt.

Der Erfindung liegt die Aufgabe zugrunde, ein Verbindungsstück mit den eingangs erwähnten Merkmalen so auszubilden, daß bei Erhaltung einer raschen und leichten Montagemöglichkeit die Gewindeteile des Verbindungsstückes in optimaler Weise geschützt sind und außerdem ein optisch guter Eindruck des Konstruktionssystems erhalten wird.

Die Lösung dieser Aufgabe geschieht erfindungsgemäß dadurch, daß das Kopfteil der Rohrbefestigungsschraube verdrehbar in der Hülse angeordnet ist und eine axiale, mit einem Innengewinde versehene Bohrung aufweist, in die das ihm gegenüberliegende mit einem entsprechenden Außengewinde versehene Kopfteil der Knotenbefestigungsschraube einschraubbar ist, wobei diese Gewinde den gleichen Schraubensinn aufweisen wie der Gewindeteil der Knotenbefestigungsschraube und die Länge der Bohrung so bemessen ist, daß das Kopfteil der Knotenbefestigungsschraube in das Kopfteil der Rohrbefestigungsschraube soweit einschraubbar ist, daß die Knotenbefestigungsschraube auf ihrer gesamten Länge innerhalb der Hülse liegt.

Dabei kann es vorteilhaft sein, wenn die Knotenbefestigungsschraube zwischen Gewindeteil und Kopfteil einen Kragen mit mehrkantiger Außenkontur aufweist, der an eine den Kopfteil der Knotenbefestigungsschraube aufnehmende axiale Ausnehmung der Hülse mit entsprechender Innenkontur angepaßt ist. Weiterhin ist es vorteilhaft, wenn die Rohrbefestigungsschraube zwischen Gewindeteil und Kopfteil einen Abschnitt mit mehrkantiger Außenkontur aufweist.

Wie weiter unten anhand eines Ausführungsbeispiels näher erläutert, kann im Transportzustand die Knotenbefestigungsschraube innerhalb der Hülse so angeordnet werden, daß der empfindliche Gewindeteil vollständig in der Hülse liegt und damit geschützt ist. Bei der Montage kann in sehr einfacher Weise die Knotenbefestigungsschraube durch bloßes Verdrehen der Hülse in ihrer Montageposition gebracht bzw. direkt in das Knotenelement eingeschraubt werden. Die Hülse kann so ausgebildet werden, daß sie den gleichen Außenquerschnitt besitzt wie das an sie anzuschließende Rohr und ist somit optisch die Rohrverlängerung, ohne als reines Verbindungsstück erkennbar zu sein.

Es ergibt sich damit, daß durch bloßes Anhalten und Drehen der Hülse ein einfaches und schnelles Handling des Verbindungsstückes gegeben ist. Die in der Transportposition versenkte Knotenbefestigungsschraube ist beim Hantieren auf der Messe und während des Transportes gegen Beschädigung geschützt. Ein beschädigtes Verbindungsstück oder Rohr kann dadurch problemlos ausgewechselt werden. Die Versenkbarkeit der Knotenbefestigungsschraube ermöglicht den einfachen Austausch von einzelnen Streben aus dem Tragwerk. Da nur die einteilige Hülse im montierten Zustand zu sehen ist, ergibt sich so eine einheitliche Optik.

Im Folgenden wird anhand der beigefügten Zeichnungen ein Ausführungsbeispiel für das erfindungsgemäße Verbindungsstück näher erläutert.

In den Zeichnungen zeigen:

Fig. 1 im Längsschnitt ein Verbindungsstück im mit einem Rohr und einem Knotenelement verbundenen Montagezustand;

Fig. 2 in einer Darstellung analog Fig. 1 das Verbindungsstück im vom Knotenelement gelösten Transportzustand;

Fig. 3A bis 3C die Hülse des Verbindungsstücks nach Fig. 1 im Schnitt und zwei Stirnansichten;

Fig. 4A bis 4C die Knotenbefestigungsschraube des Verbindungsstücks nach Fig. 1 in Seitenansicht und zwei Stirnansichten;

Fig. 5A bis 5C die Rohrbefestigungsschraube des Verbindungsstücks nach Fig. 1 im Schnitt und zwei Stirnansichten;

Fig. 6A und 6B den Schraubenbolzen des Verbindungsstückes nach Fig. 1 in einer Seiten- und einer Stirnansicht.

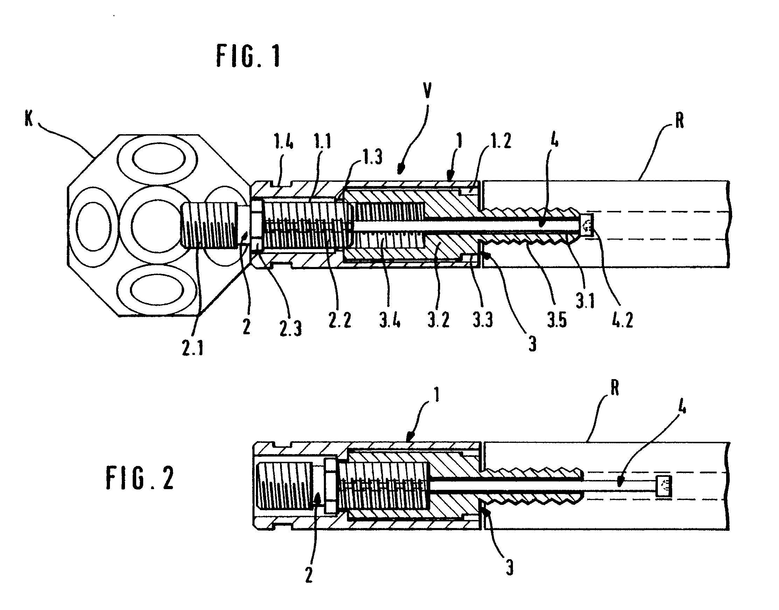

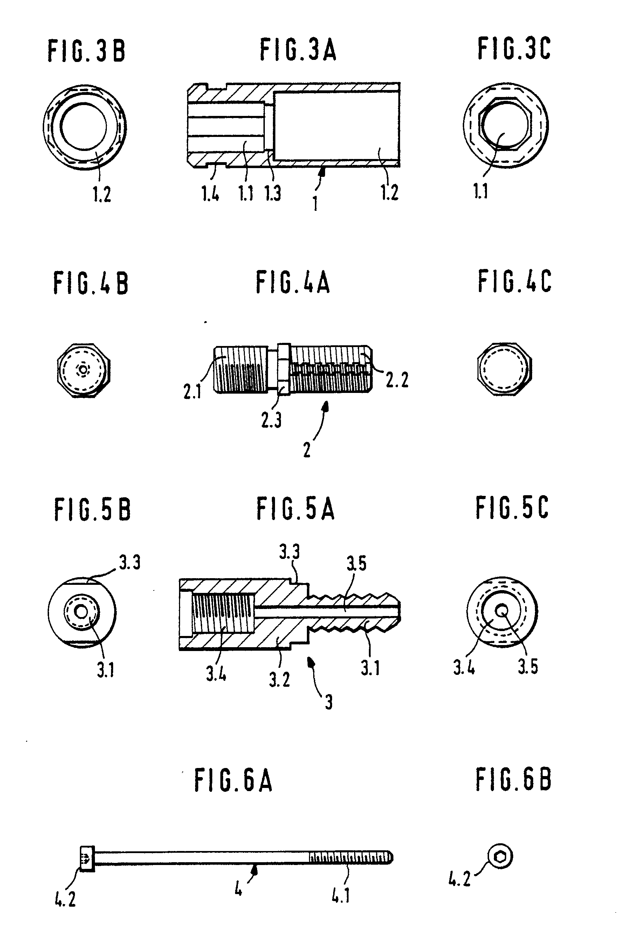

Das in den Fig. 1 und 2 im Zusammenbau und in den Fig. 3A bis 6B in den Einzelteilen dargestellte Verbindungsstück besteht aus einer Hülse 1, einer Knotenbefestigungsschraube 2, einer Rohrbefestigungsschraube 3 und einer als Schraubenbolzen ausgebildeten Justierungsschraube 4.

In Fig. 1 ist dargestellt wie das Verbindungsstück V einerseits mit einem Knotenelement K und andererseits mit einem Rohr R, die beide schematisch angedeutet sind, verbunden ist.

Die Hülse 1 besitzt an der dem Knotenelement K zugewandten Seite eine Sechskantöffnung 1.1, in der das Kopfteil 2.2 einer Knotenbefestigungsschraube angeordnet ist, deren Gewindeteil 2.1 nach außen weist und in eine entsprechende Gewindebohrung des Knotenelements eingeschraubt ist. Die Knotenbefestigungsschraube 2 ist in der Sechskantöffnung 1.1 durch einen zwischen Gewindeteil und Kopfteil angeordneten Kragen 2.3 mit entsprechender Kontur unverdrehbar, aber in axialer Richtung verschiebbar geführt. Der Kopfteil 2.2 trägt ein Außengewinde. An der gegenüberliegenden Seite besitzt die Hülse 1 eine Rundöffnung 1.2, in die der Kopfteil 3.2 einer Rohrbefestigungsschraube 3 eingedreht ist. Der Kopfteil 3.2 trägt kein Gewinde und ist daher innerhalb der Hülse 1 verdrehbar angeordnet. An der dem Kopfteil 2.2 der Knotenbefestigungsschraube 2 gegenüberliegenden Ende besitzt der Kopfteil 3.2 der Rohrbefestigungsschraube 3 eine mit Innengewinde versehene Bohrung 3.4, in welche der Kopfteil 2.2 der Knotenbefestigungsschraube 2 einschraubbar ist. Weiterhin liegt der Kopfteil 3.2 an einem als inneren Kragen ausgebildeten inneren Anschlag 1.3 in der Hülse an. Die Länge der Bohrung 3.4 ist so bemessen, daß in dem in Fig. 2 dargestellten Zustand, in dem der Kopfteil 2.2 der Knotenbefestigungsschraube 2 ganz in die Bohrung 3.4 eingeschraubt ist, der Gewindeteil 2.1 der Knotenbefestigungsschraube 2 ganz in die Hülse 1 zurückgezogen ist, so daß die Knotenbefestigungsschraube 2 in diesem Zustand auf ihrer gesamten Länge innerhalb der Hülse 1 liegt. Dies bedeutet mit anderen Worten, daß geometrisch die Summe aus der Länge der Bohrung 3.4 und der Restlänge der Hülse 1 vor der Bohrung 3.4 mindestens gleich der Gesamtlänge der Knotenbefestigungsschraube 2 sein muß. Die Gewinde in der Bohrung 3.4 bzw. auf dem Kopfteil 2.2 besitzen den gleichen Schraubensinn wie das Gewinde am Gewindeteil 2.1 der Knotenbefestigungsschraube 2. Die Justierungsschraube 4 ist von der Seite des Rohres R her durch eine axiale Bohrung 3.5 in der Rohrbefestigungsschraube 3 hindurchgeführt und mit ihrem Gewindeteil 4.1 in eine mit Innengewinde versehene axiale Bohrung des Kopfteils 2.2 der Knotenbefestigungsschraube 2 eingeschraubt, wobei im montierten Zustand (Fig. 1) der Schraubenkopf 4.2 der Justierungsschraube 4 am Gewindeteil 3.1 der Rohrbefestigungsschraube 3 anliegt. Zwischen Kopfteil 3.2 und Gewindeteil 3.1 besitzt die Rohrbefestigungsschraube 3 einen Abschnitt 3.3, der zwei Parallelflächen besitzt zum Ansetzen eines Schraubenschlüssels. Die Länge der Rundöffnung 1.2 der Hülse 1 ist so bemessen, daß im montierten Zustand, in dem der Kopfteil 3.2 am inneren Anschlag 1.3 anliegt, der Abschnitt 3.3 innerhalb der Hülse 1 liegt und nicht sichtbar ist. Die Hülse 1 besitzt auf dem größten Teil ihrer Länge eine kreisförmige Außenkontur und nur auf einem gegen die Länge der Hülse kleinen Teilabschnitt 1.4 eine mehrkantige Außenkontur zum Ansetzen eines Schraubenschlüssels.

Die Montagefolge des Verbindungsstückes V und seine Verbindung mit dem Rohr R und dem Knotenelement K ist folgende:

Die Rohrbefestigungsschraube 3 wird in die Rundöffnung 1.2 der Hülse 1 eingedreht, wobei sich das Innengewinde in der Bohrung 3.4 auf das Außengewinde des Kopfteils 2.2 der in die Sechskantöffnung 1.1 der Hülse 1 eingesteckten Knotenbefestigungsschraube 2 aufschraubt, soweit bis der Kragen 2.3 der Knotenbefestigungsschraube 2 bündig mit der Hülse 1 abschließt. Nun wird die Justierungsschraube 4 durch die Bohrung 3.5 der Rohrbefestigungsschraube 3 geschoben und in das Innengewinde des Kopfteils 2.2 der Knotenbefestigungsschraube 2 eingedreht. In dieser Position ist die Hülse 1 verschiebbar, so daß der Abschnitt 3.3 mit der Ansatzstelle für einen Schraubenschlüssel an der Rohrbefestigungsschraube 3 frei liegt. Der Gewindeteil 3.1 der Rohrbefestigungsschraube 3 wird in das Rohr R eingedreht und festgezogen. Mittels der Hülse 1 wird nun die Knotenbefestigungsschraube 2 bis zu der in Fig. 2 dargestellten Transportposition in die Hülse 1 eingedreht. In der Transportposition wird das Verbindungsstück V an das Knotenelement K angehalten und durch Drehung der Hülse 1 in nun entgegengesetzter Richtung die Knotenbefestigungsschraube 2 in das Knotenelement ein- und festgedreht, so daß der in Fig. 1 dargestellte montierte Zustand erreicht wird. Durch die Schraubverbindung zwischen der Knotenbefestigungsschraube 2 und der Rohrbefestigungsschraube 3 ist die Knotenbefestigungsschraube in axialer Richtung in jeder vorgegebenen Position arretierbar, wobei durch das mehr oder weniger tiefe Einschrauben der Justierschraube 4 ein verstellbarer Endanschlag für die Eindrehbewegung der Knotenbefestigungsschraube 2 gegeben ist. Das Abnehmen des Verbindungsstücks geschieht entsprechend in umgekehrter Reihenfolge der geschilderten Vorgänge.

Das dargestellte Verbindungsstück kann je nach dem Verwendungszweck in unterschiedlichem Material hergestellt sein. Es hat sich als zweckmäßig erwiesen, wenn die Knotenbefestigungsschraube 2, die Rohrbefestigungsschraube 3 und die Justierungsschraube 4 aus Stahl bestehen, während die Hülse 1 aus einer Aluminiumlegierung hergestellt sein kann.

## Ansprüche

1. Verbindungsstück für aus Rohren und Knotenelementen aufgebaute Konstruktionssysteme, insbesondere für den Messebau, mit einer Rohrbefestigungsschraube und einer Knotenbefestigungsschraube, die axial zueinander fluchtend in einer, sie mindestens im Bereich ihrer Kopfteile umfassenden Hülse mit nach außen weisenden Gewindeteilen angeordnet sind, wobei die Knotenbefestigungsschraube in der Hülse axial verschiebbar, aber unverdrehbar angeordnet und über einen durch eine axiale Bohrung der Rohrbefestigungsschraube geführten Schraubenbolzen mit der Rohrbefestigungsschraube verbunden ist, dadurch gekennzeichnet, daß das Kopfteil (3.2) der Rohrbefestigungsschraube (3) verdrehbar in der Hülse (1) angeordnet ist und eine axiale, mit einem Innengewinde versehene Bohrung (3.4) aufweist, in die das ihm gegenüberliegende mit einem entsprechenden Außengewinde versehene Kopfteil (2.2) der Knotenbefestigungsschraube (2) einschraubbar ist, wobei diese Gewinde den gleichen Schraubensinn aufweisen wie der Gewindeteil (2.1) der Knotenbefestigungsschraube (2) und die Länge der Bohrung (3.4) so bemessen ist, daß das Kopfteil (2.2) der Knotenbefestigungsschraube in das Kopfteil (3.2) der Rohrbefestigungsschraube soweit einschraubbar ist, daß die Knotenbefestigungsschraube (2) auf ihrer gesamten Länge innerhalb der Hülse (1) liegt.

2. Verbindungsstück nach Anspruch 1, dadurch gekennzeichnet, daß die Knotenbefestigungsschraube (2) zwischen Gewindeteil (2.1) und Kopfteil (2.2) einen Kragen (2.3) mit mehrkantiger Außenkontur aufweist, der an eine den Kopfteil (2.2) der Knotenbefestigungsschraube aufnehmende axiale Ausnehmung (1.1) der Hülse (1) mit entsprechender Innenkontur angepaßt ist.

3. Verbindungsstück nach Anspruch 1 oder 2, dadurch gekennzeichnet, daß die Rohrbefestigungsschraube (3) zwischen Gewindeteil (3.1) und Kopfteil (3.2) einen Abschnitt (3.3) mit mehrkantiger Außenkontur aufweist.

4. Verbindungsstück nach Anspruch 3, dadurch gekennzeichnet, daß das in einer axialen Bohrung (1.2) der Hülse (1) verdrehbar und verschiebbar angeordnete Kopfteil (3.2) der Rohrbefestigungsschraube (3) an einem inneren Anschlag (1.3) der Hülse (1) anliegt, wobei die Länge der axialen Bohrung (1.2) so bemessen ist, daß beim Anliegen am Anschlag (1.3) sowohl das Kopfteil (3.2) als auch der Abschnitt (3.3) mit mehrkantiger Außenkontur innerhalb der Hülse (1) liegen.

5. Verbindungsstück nach einem der Ansprüche 1 bis 4, dadurch gekennzeichnet, daß die Hülse (1) eine kreisförmige Außenkontur aufweist mit einem gegen die Länge der Hülse kleinen Teilabschnitt (1.4), der eine mehrkantige Außenkontur besitzt.

6. Verbindungsstück nach einem der Ansprüche 1 bis 5, dadurch gekennzeichnet, daß der Schraubenbolzen (4) in eine axiale Bohrung der Knotenbefestigungsschraube (2) einschraubbar ist und an seinem außerhalb der Rohrbefestigungsschraube (3) liegenden Ende einen runden Schraubenkopf (4.2) aufweist, dessen Durchmesser größer als der Durchmesser der axialen Bohrung (3.5) in der Rohrbefestigungsschraube (3), aber kleiner als der Außendurchmesser des Gewindeteils (3.1) der Rohrbefestigungsschraube ist und der an seiner Stirnfläche eine Eingriffsausnehmung aufweist.

EP 0 428 874 A2

FIG. 1

FIG. 2

6

FIG.3B    FIG.3A    FIG.3C

1.2       1.4  1.1  1.3  1       1.2       1.1

FIG.4B    FIG.4A    FIG.4C

          2.1       2.3       2.2       2

FIG.5B    FIG.5A    FIG.5C

3.3              3.3       3.5
3.1       3.4  3.2  3       3.1       3.4       3.5

FIG.6A    FIG.6B

4.2       4       4.1       4.2

7